**Europäisches Patentamt**

**European Patent Office**

**Office européen des brevets**

(11) Veröffentlichungsnummer: **0 045 412**
A2

(12) # EUROPÄISCHE PATENTANMELDUNG

(21) Anmeldenummer: **81105568.0**

(22) Anmeldetag: **15.07.81**

(51) Int. Cl.³: **G 01 N 29/04**

(30) Priorität: **31.07.80 DE 3029036**

(43) Veröffentlichungstag der Anmeldung:
**10.02.82 Patentblatt 82/6**

(84) Benannte Vertragsstaaten:
**FR GB IT SE**

(71) Anmelder: **Mannesmann AG**
**Mannesmannufer 2**
**D-4000 Düsseldorf 1(DE)**

(71) Anmelder: **Nukem GmbH**
**Rodenbacher Chaussee 6 Postfach 11 00 80**
**D-6450 Hanau 11(DE)**

(72) Erfinder: **Abend, Klaus, Dr.**
**Am Kirschberg 1**
**D-6470 Büdingen(DE)**

(72) Erfinder: **Hüschelrath, Gerhard, Dr.**
**Am Klingergraben 7**
**D-8752 Laufach(DE)**

(72) Erfinder: **Laudenbach, Karl**
**Kleebachstrasse 88**
**D-6300 Giessen(DE)**

(72) Erfinder: **Böttger, Wolfgang, Dr.**
**Friedrich-Ebert-Strasse 19**
**D-4100 Duisburg 14(DE)**

(72) Erfinder: **Schneider, Heinz, Dr.**
**Kleiansring 10**
**D-4000 Düsseldorf 31(DE)**

(74) Vertreter: **Strasse, Joachim et al,**
**Strasse & Stoffregen, Patentanwälte**
**Zweibrückenstrasse 15**
**D-8000 München 2(DE)**

(54) **Vorrichtung zur Prüfung von Werkstoffen.**

(57) Vorrichtung zur Prüfung von Prüflingen (2) aus para- und diamagnetischen sowie aus ferromagnetischen Werkstoffen oberhalb deren Curie-Punkt auf zum Beispiel Materialfehler und/oder Meßhaltigkeit, insbesondere zur Prüfung von Rohren und Brammen oberhalb 1000 °C, mit einem elektrodynamischen Wandler (1), Magnetpolschuhen (8, 11), Wirbelstromerregerund empfangswicklungen (5, 3) und Auswerteinrichtungen, wobei die Polschuhe so geformt sind, daß sich ein zum Prüfling paralleles Magnetfeld ausbildet und die Wirbelstromerreger- und empfangswicklungen gegenüber dem Prüfling wärmeisoliert sind (Abb. III).

Fig.3

COMPLETE DOCUMENT

EP 0 045 412 A2

## Vorrichtung zur Prüfung von Werkstoffen

Die Erfindung betrifft eine Vorrichtung zur Prüfung von para- und diamagnetischen metallischen Werkstoffen sowie von ferromagnetischen Werkstoffen oberhalb deren Curie-Punkte auf Materialfehler und Maßhaltigkeit, insbesondere zur Prüfung von Rohren und Brammen oberhalb 1000 $^\circ$C, im wesentlichen bestehend aus einem elektrodynamischen Wandler mit zwei Magnetpolschuhen, Wirbelstromerreger- und -empfangswicklungen und einer Auswerteelektronikeinheit.

Im Zuge der Qualitätssteigerung und Produktionsoptimierung muß die Qualität eines Produktes bereits in einem so frühen Stadium geprüft und festgestellt werden, daß eine Korrektur noch möglich ist. So ist es z.B. bei der Herstellung nahtloser Rohre, insbesondere Stahlrohre wichtig, bereits am heißen Rohr dessen Toleranzhaltigkeit zu prüfen, um Einstellfehler der Produktionslinie frühzeitig erkennen und die nachfolgenden Walzgerüste steuern zu können.

Aus der Literatur sind eine Reihe von Meßmöglichkeiten an heißen Prüflingen bekannt geworden. Sie lassen sich in kontaktierende und kontaktlose Verfahren unterteilen.

So gibt es beispielsweise piezoelektrische Schwinger mit einer Hochdruck-Fließwasserankopplung. Mit hohem Druck wird zwischen dem Prüfling und dem Ultraschallschwinger eine Wasserstrecke erzeugt. Der Erfolg des Verfahrens hängt aber

BAD ORIGINAL

...

stark von der Oberflächenbeschaffenheit des Prüflings ab. Das Verfahren ist relativ langsam, und es werden relativ große Wassermengen benötigt. Die lokale Abkühlung des Prüflings durch das Koppelwasser kann zu Spannungen und Rissen des Prüflings führen.

Weiterhin sind piezoelektrische Schwinger mit Preßankopplungen bekannt. Die direkte Ankopplung des Schwingers unter hohem Anpreßdruck kann dabei im Bereich einer Walzrolle erfolgen, was allerdings den Einsatzort stark einschränkt, da nicht an beliebigen Punkten der Walzstraße gemessen werden kann. Eine Messung auf Toleranzhaltigkeit ist nach dieser Methode nicht möglich.

Über die Anregung von Ultraschallimpulsen durch lokale Erhitzung des Prüflings mit einem Hochleistungsimpulslaser ist ebenfalls berichtet worden. Ein Einsatz bei der industriellen Prüfung ist jedoch nur mit Einschränkungen möglich.

Außerdem gibt es radiologische Verfahren. Diese mit Röntgen-, Beta- oder Gamma-Strahlen arbeitenden Verfahren werfen Strahlenschutzprobleme auf und erfordern eine relativ große Meßzeit bei den üblicherweise geforderten Meßgenauigkeiten.

Bekannt ist auch die elektrodynamische Anregung von Ultraschall, die auf der Tatsache beruht, daß auf einen stromführenden Körper in einem Magnetfeld eine Kraft ausgeübt wird, die senkrecht auf die Ebene wirkt, die von dem Magnetfeld- und dem Stromvektor aufgespannt wird. Ein Elektromagnet erzeugt über eine Polschuhkonfiguration das Magnetfeld, während der Strom als Wirbelstromimpuls über eine Wandlerspule im Prüfling angeregt wird. Die Größe des so entstehenden Kraftimpulses und damit die Stärke des Ultraschallimpulses hängt wesentlich von der Wirbelstromstärke und vor allem von der Magnetfeldstärke ab. Um beide Faktoren in einer Größenordnung, die eine Ultraschallauswertung zuläßt, im Prüfling erzeugen zu können, muß der elektrodynamische Wandlerkopf sehr nahe an den Prüfling gebracht werden. Je nach Bauform des Wandlers können die unterschiedlichsten Ultraschallwellentypen erregt werden. In der DE-PS 26 55 804 oder den DE-ASen 26 21 684 und 28 43 804 sind derartige Verfahren und Vorrichtungen beschrieben. Der Nachteil dieser Vorrichtungen ist jedoch, daß sie sich je nach Bauart nur zur Erzeugung von Transversalwellen, geführten Wellen oder Lamb-Wellen eignen, die jedoch bei hohen Temperaturen im Prüfling stark gedämpft werden, da der Schermodul stark abnimmt, und somit technisch nicht ausnutzbar sind. Alle oben aufgeführten Verfahren haben darüberhinaus den Nachteil, daß sie sich auf ferritische Materialien oder solche Prüflingsgeometrien beschränken, die zwischen die Polschuhe des elektrodynamischen Wandlers passen. Das bedeutet, daß die Dicke des Prüflings auf einige Millimeter beschränkt ist.

Die für Messungen an heißen Prüflingen oder solchen aus para- bzw. diamagnetischen Metallen notwendigen Longitudinalwellen-Wandler sind beispielsweise in British Journal of Non-Destructive Testing, 20, 1978, No. 5, September, Seite 242-247, in Material Evaluation, 34, 1976, No. 4, April, Seite 81-90, und in Ultrasonics, 16, 1978, No. 7, July, Seite 151-155, beschrieben. Es handelt sich hierbei jedoch nur um Wandler, die nicht für hohe Temperaturen und geringe Abstände Prüfling-Wandler geeignet sind, da sie nur maximal 1000 $^{\circ}$C Prüflingstemperatur zulassen.

Es war daher Aufgabe der Erfindung, eine Vorrichtung zur Prüfung von para- und diamagnetischen metallischen Werkstoffen sowie von ferromagnetischen Werkstoffen oberhalb deren Curie-Punkte auf Materialfehler und Maßhaltigkeit zu finden, insbesondere zur Prüfung von Rohren und Brammen oberhalb 1000 $^{\circ}$C, im wesentlichen bestehend aus einem elektrodynamischen Wandler mit zwei Magnetpolschuhen, Wirbelstromerreger- und -empfangswicklungen und einer Auswerteelektronikeinheit, wobei der Wandler Longitudinalwellen erzeugen, bis auf mindestens 1 mm an den Prüfling herangebracht werden und gegen hohe Temperaturen unempfindlich sein sollte.

Die Aufgabe wurde erfindungsgemäß dadurch gelöst, daß die Polschuhe des Wandlers so geformt sind, daß sich ein zum Prüfling paralleles Magnetfeld ausbildet und die Wirbelstromerreger- und -empfangswicklungen gegenüber dem Prüfling wärmeisoliert sind.

...

Vorzugsweise sind diese Wicklungen auf der dem Prüfling zugewandten Seite in eine wärmedämmende Keramikschicht und auf der abgewandten Seite in eine wärmeleitende Keramikschicht eingebettet.

Anhand der schematischen Abbildungen I bis VI wird die erfindungsgemäße Vorrichtung in beispielhafter Ausgestaltung näher erläutert.

Die Vorrichtung besteht im wesentlichen aus einem elektrodynamischen Wandler (1) mit der Erregerwicklung (22), den Magnetpolschuhen (8, 11) und den Wirbelstromerreger- bzw. -empfangswicklungen (5, 3) sowie einer Auswerteelektronik (23).

Die Wirbelstromerreger- und -empfangswicklungen (5, 3) sind, da sie bis auf etwa 1 mm an den heißen Prüfling (2) gebracht werden müssen, entsprechend temperaturfest ausgelegt. Dementsprechend befindet sich prüflingsseitig an den Wicklungen (3, 5) eine wärmedämmende Schutzkeramik (6) von beispielsweise ca. 0,5 mm Dicke, vorzugsweise aus Aluminiumoxid. Auch im extremen Fall einer Prüflingstemperatur von 1300 $^{o}$C steigt die wandlerseitige Temperatur nicht über ca. 350 $^{o}$C. Der für die Wicklungen (3, 5) benutzte isolierte Draht, z.B. Kupferdraht, ist bis ca. 200 $^{o}$C dauerbelastbar. Über die wärmeleitende Keramikschicht (7), die wandlerseitig auf die Wicklung aufgetragen wird, erfolgt eine weitere Kühlung, so daß die Dauerbelastbarkeitstemperatur nicht überschritten wird. Diese zweite Keramikschicht (7) dient als Wärmeleitung und dichtet vorteilhafterweise die aus Gründen der Ausdehnungsfähigkeit der Wärmedämmkeramikplatte (6) notwendigen Spalte zu den Polschuhen (8, 11) ab. Vorzugsweise verwendet man hierzu einen wärmeleitenden Keramikkleber. Die wandlerseitige Fläche der Wicklungen (3, 5) wird vorteilhafterweise zusätzlich von einer Kühlflüssigkeit (24) gekühlt.

Neben der Wärmedämmung der Wicklungen (3, 5) kommt einer geeigneten Form der Polschuhe (8, 11) große Bedeutung zu. Um Longitudinalwellen im Prüfling anregen zu können, ist ein möglichst starkes Magnetfeld (25) parallel zur Prüflingsoberfläche zu erzeugen. Im Bereich der Wirbelströme sind lediglich horizontale Komponenten erwünscht. Vertikale Komponenten regen Transversalwellen an, die aber in heißen Prüflingen keine Ausbreitungsbedingungen vorfinden und bei kalten para- und diamagnetischen Werkstoffen zu störenden Echos führen. Um daher ein gemäß Abb. V ausgebildetes Feld zu bekommen, ist es besonders vorteilhaft, wenn der eine Polschuh (8) eine konische Form hat. Der Winkel des Konus (35) richtet sich nach der Breite der benötigten Wirbelstromerregerwicklungen und Wirbelstromempfangswicklungen (3, 5). Um ein vom Abstand des Prüflings (2) unabhängiges, symmetrisches Magnetfeld zu bekommen, ist es besonders günstig, wenn die Größe der parallel zum Prüfling (2) befindliche Fläche (9) des einen Polschuhs (8) in etwa gleich der Größe der entsprechenden Fläche (10) des Gegen-Polschuhs (11) ist.

Vorteilhaft ist es auch, den anderen Polschuh (11) gegen die Ebene der Polschuhflächen (9, 10) um mindestens einen Winkel von 25° zu neigen.

Die Neigung der Kantenfläche (12) entspricht vorteilhafterweise in etwa dem Winkel der Konusfläche (35) des Polschuhs (8). Zur Vermeidung von Feldstärkeverlusten ist die durch die Mantelfläche (13) des Polschuhs (11) und die geneigte Fläche (12) entstehende Kante gebrochen und bildet eine Kantenfläche (34). Dadurch werden die hier wegen der Spitzenwirkung (durch Abstandsverminderung) sonst besonders stark ausgebildeten Magnetfelder vermieden.

Eine besondere Bedeutung kommt der Formgebung und der Neigung der Polschuhe (8, 11) auch aus einem zweiten Grund zu. Damit in den Polschuhen (8, 11) die durch Wicklungen (3, 5) induzierten Wirbelströme vermieden werden, die zu Ultraschallimpulsen in den Polschuhen führen, durch Mehrfachreflexion immer wieder an die Ursprungsorte zurückkehren als Störrauschen im Empfänger erscheinen können, ist die Neigung des Polschuhs (11) vorteilhafterweise so zu wählen, daß diese Störimpulse sich am Polschuh (11) nach außen hin verlaufen. Der Polschuh (8) ist vorzugsweise aus gegeneinander isolierten Blechen aufgebaut. Dadurch ergibt sich auch eine Erweiterung der Toleranzbereiche für den Abstand der Sonde (1) zum Prüfling (2).

Zum Schutz der Polschuhe vor Wärme, so daß das Polschuhmaterial für seine Funktionsfähigkeit unterhalb seines

...

Curie-Punktes bleibt, sind die Polschuhe (8, 11) gekühlt. Der Polschuh (11) weist vorzugsweise einen von einem Kühlmittel durchflossenen Kühler (14) aus nicht ferritischem Material auf. Der Polschuh (8) ist dagegen mit einem Kühlkanal (26) versehen, der das Kühlmittel auch an der wärmeleitenden Keramikschicht (7) und der Magnetfelderregerwicklung (22) vorbeiführt und so auch deren Kühlung übernimmt. Das Kühlmittel wird in einem geschlossenen oder offenen Kreislauf (27) durch den Wandlerkopf (1) gepumpt.

Den elektronischen Aufbau der erfindungsgemäßen Vorrichtung zeigt Abb. I. Zur Erzeugung der Ultraschallimpulse speist ein Sender (28) über ein Anpaßglied (29) die Wirbelstromerregerwicklung (5). Echos aus dem Prüfkörper (2) werden über die Empfangswicklung (3) empfangen. Über eine aktive Anpassung (4) gelangen die Signale in den Darstellungsverstärker (30) und zur Darstellung (31). Der gesamte Ablauf wird durch eine Steuerung (32) aktiviert. Das Magnetfeld wird über eine Gleichstromquelle (33) gesteuert.

Das aktive Anpassungsglied (4) der Auswerteelektronikeinheit besteht vorzugsweise aus einem Dämpfungsglied (16), einen oder mehreren Anpaßkondensatoren (17), einem Sende-Empfangsschalter (18), einem Filter (19), einem Vorverstärker (20) und einem Leitungstreiber (21). (Abb. II)

...

Als Anpassungsglied (17) benutzt man einen oder mehrere Kondensatoren. Die Signale werden von diesem Anpassungsglied (17) abgegriffen, über den Vorverstärker (20) und dann über einen Leitungstreiberverstärker (21) auf die Leitung übertragen, deren Länge bei dieser Konfiguration beliebig sein kann. Zum Schutz des Vorverstärkers (20) vor Übersteuerung ist ein Sende-Empfangsschalter (18) vorgesehen, der im wesentlichen aus einem Analogschalter und diversen Schutzdioden besteht.

Das im Eingangskreis befindliche elektronisch schaltbare Dämpfungsglied (16) bewirkt, daß der Resonanzschwingerkreis, der aus Erregerwicklung (3) und dem Anpaßglied (17) besteht, im Sendefall so gedämpft ist, daß keine unzulässig lange Totzone entsteht, in der keine Echos empfangen werden können. Wenn sich aus Toleranzgründen der Abstand des Wandlers (1) zum Prüfobjekt (2) ändert, bedeutet dies eine Variation der Schwingkreisbedämpfung, was dazu führt, daß sich die Sende-Totzeit verlängert und sich die Echoimpulse verbreitern. Eine Echoimpulsverbreiterung würde jedoch das Auflösungsvermögen des Verfahrens verschlechtern. Das erfindungsgemäße aktive Anpaßglied (4) sorgt demgegenüber für eine geeignete Bedämpfung der Sende- und Echosignale, was durch ein elektronisch schaltbares Dämpfungsglied (16) und ein Bandfilter (19) realisiert ist.

Folgende Beispiele sollen typische Anwendungen der erfindungsgemäßen Vorrichtung wiedergeben:

. . .

Beispiel 1

Prüfling          : Rohr mit Wanddicke von 40 mm
Material          : ferritischer Stahl
Temperatur        : 1200 $^{\circ}$C
Messung           : Wanddicke
Sender            : Impulslänge 1 $\mu$s bei 300 V an 12 Ohm
Wandlerabstand    : 1 mm (Toleranz $\pm$ 0,5 mm)
Wandlerwicklungen : Sender 20, 0,1 mm Kupferdraht
                    Empfänger 50, 0,05 mm Kupferdraht
Meßgenauigkeit    : $\pm$ 0,1 mm


Beispiel 2

Prüfling          : Aluminiumband mit einer Dicke von 20 mm
Temperatur        : Raumtemperatur
Messung           : Banddicke
Sender            : Impulslänge 1 $\mu$s bei 300 V an 12 Ohm
Wandlerabstand    : 0,85 mm, (Toleranz $\pm$ 0,3 mm)
Wandlerwicklungen : Sender 29, 0,1 mm Kupferlackdraht
                    Empfänger 50, 0,05 Kupferlackdraht
Meßgenauigkeit    : $\pm$ 0,05 mm

Das Verfahren ist nicht auf Luft als Arbeitsmedium beschränkt und arbeitet auch unter starker Strahlenbelastung, z.B. in heißen Zellen kerntechnischer Anlagen.

----------------------

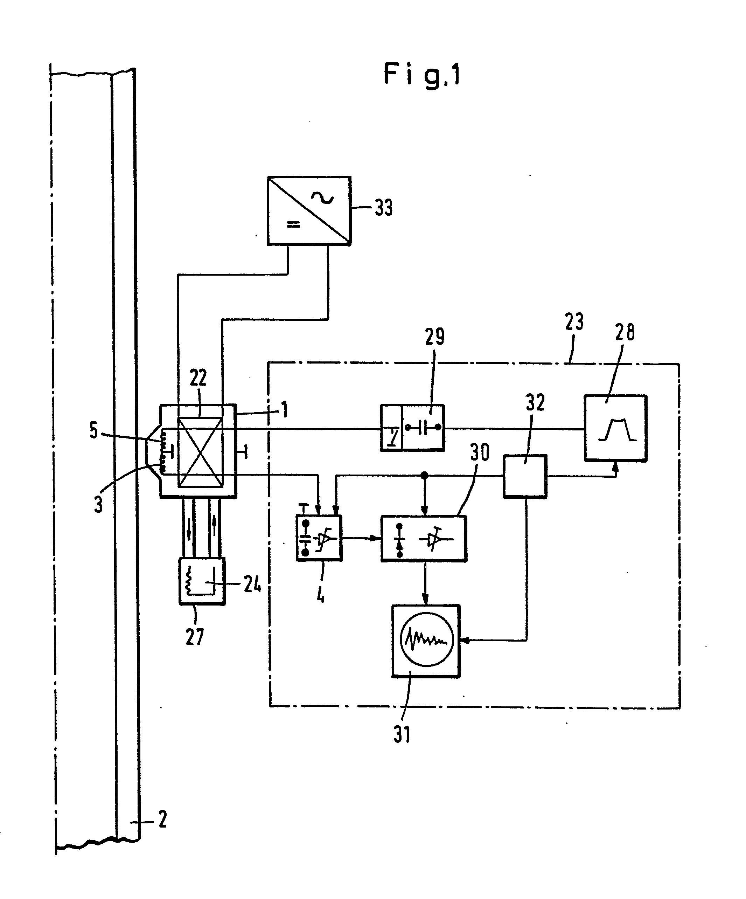

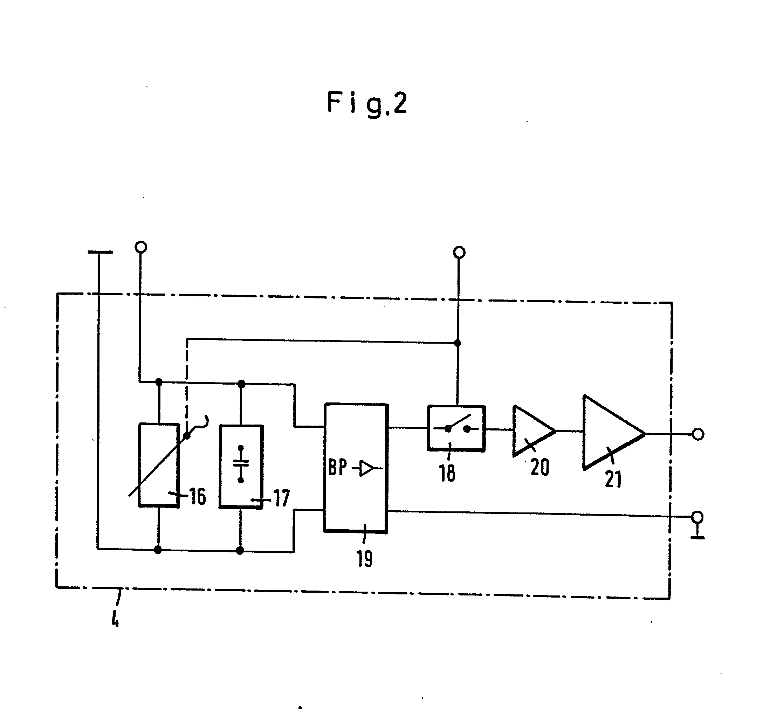

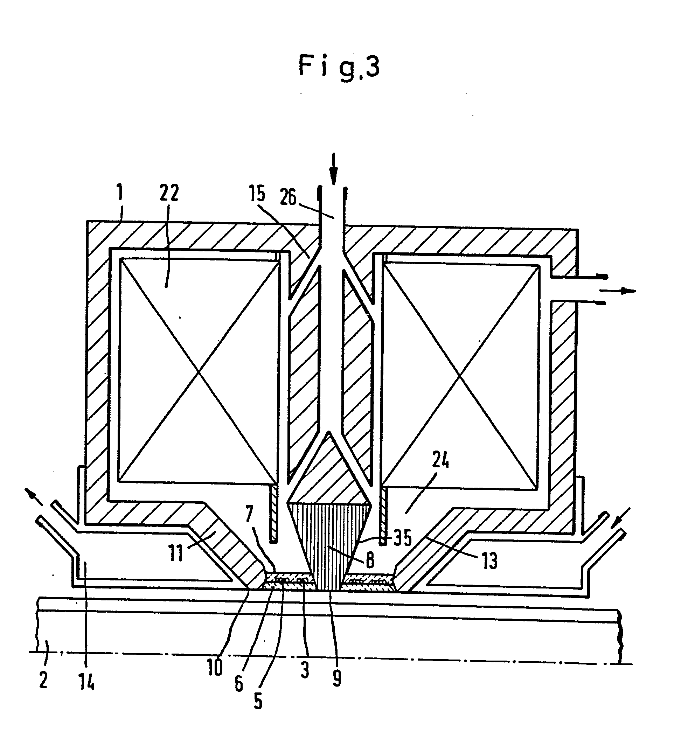

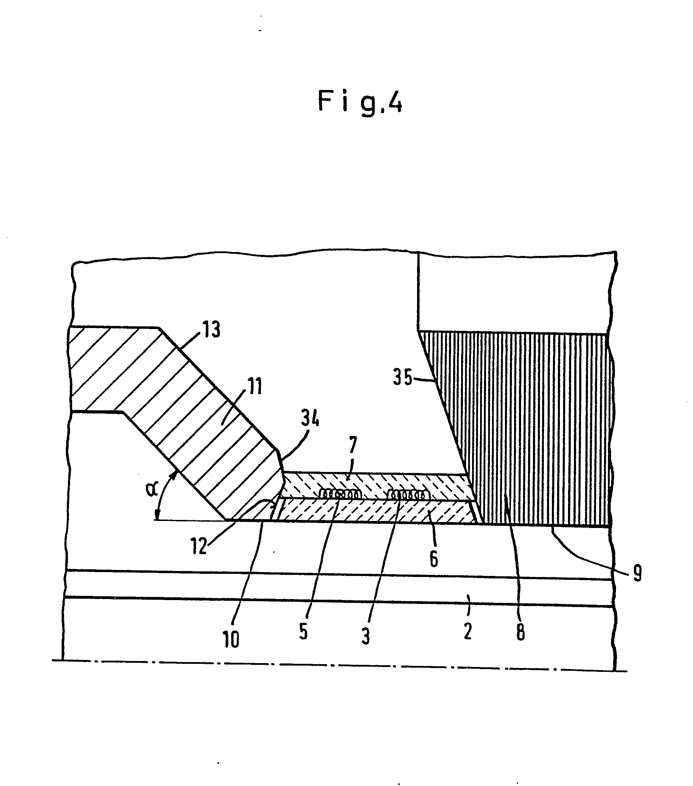

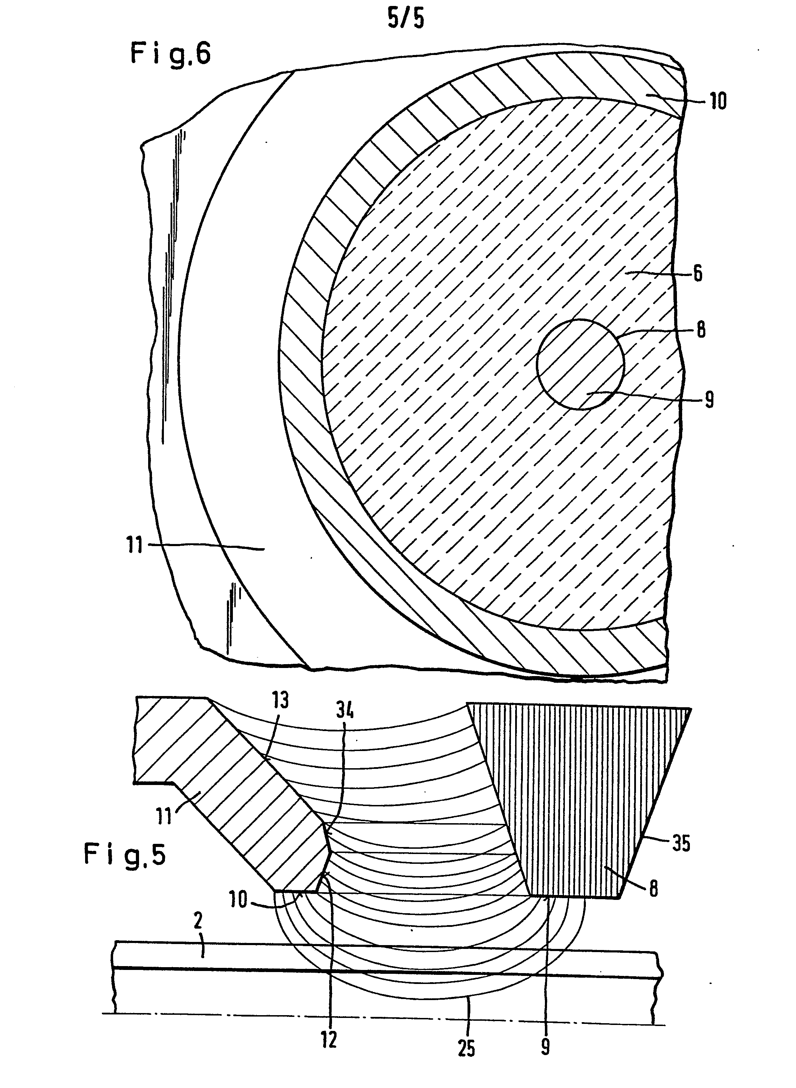

Patentansprüche:

1. Vorrichtung zur Prüfung von para- und diamagnetischen metallischen Werkstoffen sowie von ferromagnetischen Werkstoffen oberhalb deren Curie-Punkte auf Materialfehler und Maßhaltigkeit, insbesondere zur Prüfung von Rohren und Brammen oberhalb 1000 $^{O}$C, im wesentlichen bestehend aus einem elektrodynamischen Wandler mit zwei Magnetpolschuhen, Wirbelstromerregerwicklungen, Wirbelstromempfangswicklungen und einer Auswerteelektronikeinheit,
d a d u r c h   g e k e n n z e i c h n e t,
daß die Polschuhe (8, 11) so geformt sind, daß sich ein zum Prüfling paralleles Magnetfeld ausbildet und die Wirbelstromerregerwicklungen (5) und -empfangswicklungen (3) gegenüber dem Prüfling wärmeisoliert sind.

2. Vorrichtung nach Anspruch 1,
d a d u r c h   g e k e n n z e i c h n e t,
daß die Wicklungen (3, 5) prüflingsseitig in eine wärmedämmende Keramikschicht (6) und wandlerseitig in eine wärmeleitende Keramikschicht (7) eingebettet sind.

3. Vorrichtung nach Anspruch 1 und 2,
d a d u r c h   g e k e n n z e i c h n e t,
daß die wärmedämmende Keramikschicht (6) aus Aluminiumoxid und die wärmeleitende Keramikschicht (7) aus einem Keramikkleber besteht.

. . .

4. Vorrichtung nach Anspruch 1 bis 3,
   d a d u r c h   g e k e n n z e i c h n e t,
   daß der eine Polschuh (8) eine konische Form hat.

5. Vorrichtung nach Anspruch 1 bis 4,
   d a d u r c h   g e k e n n z e i c h n e t,
   daß der Polschuh (8) aus gegeneinander isolierten
   Blechen aufgebaut ist.

6. Vorrichtung nach Anspruch 1 bis 5,
   d a d u r c h   g e k e n n z e i c h n e t,
   daß der andere Polschuh (11) gegen die Ebene der Polschuhflächen (9, 10) um mindestens einen Winkel ($\alpha$)
   von 25 $^{o}$ geneigt ist.

7. Vorrichtung nach Anspruch 1 bis 6,
   d a d u r c h   g e k e n n z e i c h n e t,
   daß sich die Polschuhflächen (9, 10) der beiden Polschuhe (8, 11) etwa auf gleicher Ebene befinden und
   etwa gleiche Oberflächengrößen aufweisen.

8. Vorrichtung nach Anspruch 1 bis 7,
   d a d u r c h   g e k e n n z e i c h n e t,
   daß die konische Neigung der Polschuhfläche (35) etwa
   der Neigung der Kantenfläche (12) des anderen Polschuhs
   (11) entspricht.

9. Vorrichtung nach Anspruch 1 bis 8, dadurch gekennzeichnet, daß die zwischen der Mantelfläche (13) des Polschuhs (11) und der Kantenfläche (12) gebildete Kante ebenfalls als Kantenfläche (34) ausgebildet ist.

10. Vorrichtung nach Anspruch 1 bis 9, dadurch gekennzeichnet, daß an der Unterseite des Polschuhs (11) ein Kühler (14) angeordnet ist.

11. Vorrichtung nach Anspruch 1 bis 10, dadurch gekennzeichnet, daß der Polschuhträger (15) des Polschuhs (8) einen Kühlkanal enthält.

12. Vorrichtung nach Anspruch 1 bis 11, dadurch gekennzeichnet, daß die Auswerteelektronikeinheit (23) ein aktives Anpassungsglied (4) enthält, das im wesentlichen aus einem Dämpfungsglied (16), einem oder mehreren Anpaßkondensatoren (17), einem Sende-Empfangsschalter (18), einem Filter (19), einem Vorverstärker (20) und einem Leitungstreiber (21) besteht.

---

Fig.1

Fig.2

Fig.3

Fig.4

Fig.6

10

6

8

9

11

13   34

11

Fig.5

35

8

10

2

12   25   9